# EUROPEAN PATENT SPECIFICATION

(11) **EP 2 870 807 B1**
(45) Date of publication and mention of the grant of the patent: **19.07.2023**
(21) Application number: 12877347.0
(22) Date of filing: 21.05.2012
(51) Int. Cl.: H04W 56/00, H04B 7/26

(54) **METHOD AND APPARATUS**
VERFAHREN UND VORRICHTUNG
PROCÉDÉ ET APPAREIL

(43) Date of publication of application: 13.05.2015
(73) Proprietor: Nokia Solutions and Networks Oy, 02610 Espoo (FI)
(72) Inventor: SKOV, Peter, Beijing 100044 (CN); WANG, Xiaoyi, Beijing 100013 (CN); WU, Chao, Beijing 100083 (CN)
(74) Representative: Cohausz & Florack
(86) International application number: PCT/CN2012/075840
(87) International publication number: WO 2013/173969

(56) References cited:
- WO-A1-2010/135712
- NEC GROUP: 'Discussion on time frequency synchronisation for the extension carrier' 3 GPP TSG-RAN WG1L#67 R1-113869 08 November 2012, SAN FRANCISCO, USA, XP050561953 Retrieved from the Internet: <URL:http://www.3gpp.org/ftp/tsg-ran/wgl-rl 1/tsfrl-67/Docs/R1-113869.zip>
- HUAWEI ET AL.: 'Discussion on antenna ports collocation' 3GPP TSG RAN WG1#69 R1-122512 11 May 2012, PRAGUE, CZECH REPUBLIC, XP050600712 Retrieved from the Internet: <URL:http://www.3gpp.org/ftp/tsg-ran/wg1-rl 1/tsfrl-69/Docs/R1-122512.zip>
- CATT: "Discussion on DMRS associated issues in E-PDCCH", 3GPP DRAFT; R1-122048, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600338, [retrieved on 2012-05-12]
- FUJITSU: "Discussion of DL CoMP control signaling", 3GPP DRAFT; R1-122081 DISCUSSION ON DL COMP CONTROL SIGNALLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600370, [retrieved on 2012-05-12]
- PANTECH: "Downlink Control signaling to support CoMP", 3GPP DRAFT; R1-122450, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600703, [retrieved on 2012-05-12]
- CMCC: "Autonomous inter-cell interference cancellation", 3GPP DRAFT; R1-122710_AUTONOMOUS INTER-CELL INTERFERENCE CANCELLATION - FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague; 20120521 - 20120525, 12 May 2012 (2012-05-12), XP050600893, [retrieved on 2012-05-12]

## Description

This disclosure relates to synchronization of user equipment with a plurality of transmission points in a communication system.

A communication system can be seen as a facility that enables communication sessions between two or more entities such as fixed or mobile communication devices, base stations, servers and/or other communication nodes. A communication system and compatible communicating entities typically operate in accordance with a given standard or specification which sets out what the various entities associated with the system are permitted to do and how that should be achieved. For example, the standards, specifications and related protocols can define the manner how various aspects of communication shall be implemented between communicating devices. A communication can be carried on wired or wireless carriers. In a wireless communication system at least a part of communications between stations occurs over a wireless link.

Examples of wireless systems include public land mobile networks (PLMN) such as cellular networks, satellite based communication systems and different wireless local networks, for example wireless local area networks (WLAN). A wireless system can be divided into cells or other radio coverage or service areas. A radio service area is provided by a station. Radio service areas can overlap, and thus a communication device in an area can typically send signals to and receive signals from more than one station.

A user can access the communication system by means of an appropriate communication device. A communication device of a user is often referred to as user equipment (UE) or terminal. A communication device is provided with an appropriate signal receiving and transmitting arrangement for enabling communications with other parties. Typically a communication device is used for enabling receiving and transmission of communications such as speech and data. In wireless systems a communication device provides a transceiver station that can communicate with another communication device such as e.g. a base station and/or another user equipment. The communication device may access a carrier provided by a station, for example a base station, and transmit and/or receive communications on the carrier.

An example of communication systems is an architecture that is being standardized by the 3rd Generation Partnership Project (3GPP). This system is often referred to as the long-term evolution (LTE) of the Universal Mobile Telecommunications System (UMTS) radio-access technology. A further development of the LTE is often referred to as LTE-Advanced. The various development stages of the 3GPP LTE specifications are referred to as releases.

A communication system can be provided with error correction functionality, such as with a possibility of requesting for retransmission of any information that the recipient could not successfully decode. For example, the 3GPP LTE uses a hybrid automatic repeat request (HARQ) error control mechanism. The error control mechanism can be implemented such that a device which receives either a positive or a negative acknowledgement (ACK/NACK) or other indication from another device of an error free or erroneous receipt of transmitted data can take appropriate action. Typically this means resending of a faulty protocol data unit to the receiving device in response to a negative acknowledgement. In LTE the acknowledgement signalling can be communicated on a physical HARQ indicator channel (PHICH) based on a HARQ timing scheme.

A communication system can comprise different types of radio service areas providing transmission/reception points for the users. For example, in LTE-Advanced the transmission/reception points can comprise wide area network nodes such as a macro eNode B (eNB) which may, for example, provide coverage for an entire cell or similar radio service area. Network nodes can also be small or local radio service area network nodes, for example Home eNBs (HeNS), pico eNodeBs (pico-eNB), or femto nodes. Some applications utilise radio remote heads (RRH) that are connected to for example an eNB. The smaller radio service areas can be located wholly or partially within the larger radio service area. A user equipment may thus be located within, and thus communicate with, more than one radio service area. The nodes of the smaller radio service areas may be configured to support local offload. The local nodes can also, for example, be configured to extend the range of a cell. Coordinated multi-point reception (CoMP) is considered for LTE-Advanced as a tool to improve the coverage of high data rates and to increase system throughput. Uplink CoMP implies reception of the signal from a user equipment at a plurality of geographically separated points connected via appropriate backhaul connections.

Downlink coordinated multipoint transmission (CoMP) is a technique where a user equipment receives transmissions from a plurality of base stations. CoMP can be provided for example in heterogeneous network scenarios. In such an arrangement a centralised processing unit controlling the relevant cells may also provided.

In the standard contribution R1-122450 to the 3GPP TSG RAN1 meeting #69, DL signaling issues from the different sessions are summarized. In addition, transmission mode and PDSCH RE mapping in joint transmission are also discussed. In the standard contribution R1-122710 to the 3GPP TSG RAN WG1 meeting #69, the possible enhancement of the reference signals from autonomous interference avoidance and cancellation perspective is discussed.

According to a first aspect there is provided a method according to independent claim 1. Said method comprising receiving at a user equipment a plurality of broadcast signals, wherein said plurality of signals comprise at least one of a primary synchronization signal (PSS); a secondary synchronization signal (SSS); and a common reference symbol (CRS); receiving control information, said control information defining which of a plurality of signals said user equipment uses for synchronization, wherein said control information indicates that said user equipment is to use a user equipment specific signal for synchronization to obtain synchronization information with respect to a transmission point; receiving at said user equipment said user equipment specific signal, wherein said user equipment specific signal comprises a demodulation reference signal; and using said user equipment specific signal to obtain said synchronization information with respect to said transmission point, wherein said transmission point is one transmission point of a plurality of transmission points , wherein said synchronization information comprises frequency information and timing information, and wherein said user equipment is in communication with the plurality of transmission points, said transmission point being a serving transmission point, said control information indicating if said user equipment is to use a same or different reference to that of the serving transmission point for at least one other of said transmission points. Preferably said method comprises reevaluating said synchronization.

According to a second aspect there is provided a method according to independent claim 2.

Said method comprising transmitting to a user equipment a plurality of broadcast signals, wherein said plurality of signals comprise at least one of a primary synchronization signal (PSS); a secondary synchronization signal (SSS); and a common reference symbol (CRS); transmitting to said user equipment information, said information being usable by the user equipment to determine which of a plurality of signals to use for synchronization, wherein said information indicates that the user equipment is to use a user equipment specific signal for synchronization to obtain synchronization information with respect to a transmission point, wherein said synchronization information comprises frequency information and timing information, wherein said user equipment specific signal comprises a demodulation reference signal (DMRS), and wherein said user equipment is in communication with a plurality of transmission points, one of said transmission points being a serving transmission point, said information indicating if said user equipment is to use a same or different reference to that of the serving transmission point for at least one other of said transmission points.

Preferably said information comprises synchronization accuracy information.

Preferably the information indicates that said user equipment is to reevaluate synchronization.

According to a third aspect there is provided an apparatus according to independent claim 4. The apparatus comprising: at least one processor; and at least one memory including computer program code; the at least one memory and the computer program code configured to, with the at least one processor cause the apparatus at least to perform the receive method as defined in claim 1.

Acording to a fourth aspect there is provided an apparatus according to independent claim 5. The apparatus comprising: at least one processor; and at least one memory including computer program code; the at least one memory and the computer program code configured to, with the at least one processor cause the apparatus at least to perform the transmission method as defined in independent claim 2.

According to an eighth aspect there is provided a computer program comprising computer executable instructions which when run an one or more processors perform the method as described herein.

Embodiments will now be described in further detail, by way of example only, with reference to the following examples and accompanying drawings, in which:
Figure 1 shows a schematic diagram of a network according to some embodiments;
Figure 2 shows a schematic diagram of a mobile communication device according to some embodiments;
Figure 3 shows a schematic diagram of a control apparatus according to some embodiments;
Figure 4 schematically shows a user equipment connected to a plurality of transmission points according to some embodiments; and
Figure 5 shows a signalling flow between a user equipment and a plurality of transmission points according to some embodiments.
Figure 6 shows user equipment processing according to some embodiments.

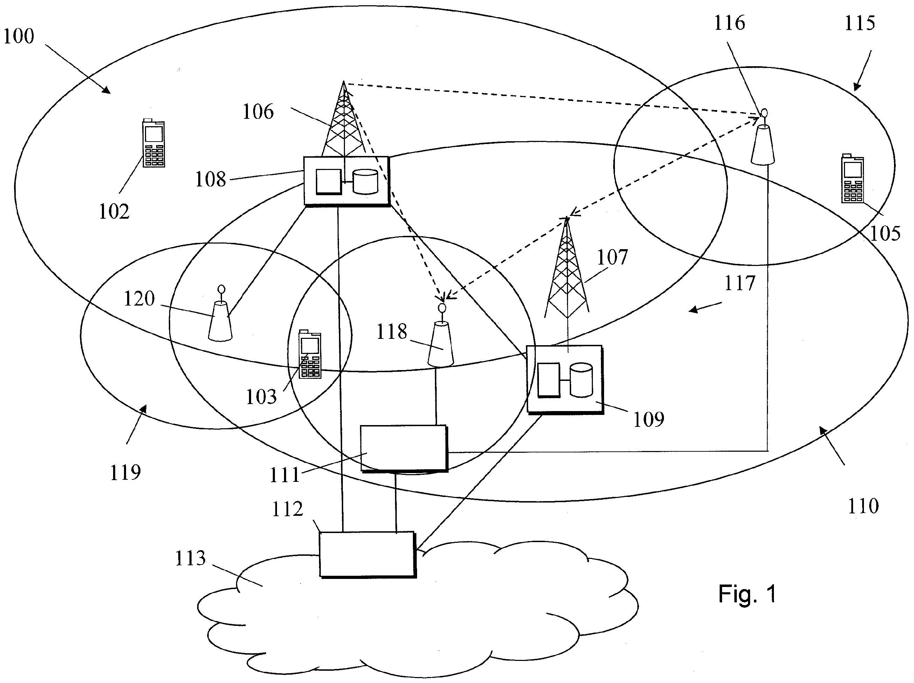

In the following certain exemplifying embodiments are explained with reference to a wireless or mobile communication system serving mobile communication devices. Before explaining in detail the exemplifying embodiments, certain general principles of a wireless communication system and mobile communication devices are briefly explained with reference to Figures 1 to 3 to assist in understanding the technology underlying the described examples.

In a wireless communication system mobile communication devices or user equipments (UE) 102, 103, 105 are provided wireless access via at least one base station or similar wireless transmitting and/or receiving node or point. In the figure 1 example two overlapping access systems or radio service areas of a cellular system 100 and 110 and three smaller radio service areas 115, 117 and 119 provided by base stations 106, 107, 116, 118 and 120 are shown. Each mobile communication device and station may have one or more radio channels open at the same time and may send signals to and/or receive signals from more than one source. It is noted that the radio service area borders or edges are schematically shown for illustration purposes only in Figure 1. It shall also be understood that the sizes and shapes of radio service areas may vary considerably from the shapes of Figure 1. A base station site can provide one or more cells. A base station can also provide a plurality of sectors, for example three radio sectors, each sector providing a cell or a subarea of a cell. All sectors within a cell can be served by the same base station.

Base stations are typically controlled by at least one appropriate controller apparatus so as to enable operation thereof and management of mobile communication devices in communication with the base stations. In Figure 1 control apparatus 108 and 109 is shown to control the respective macro level base stations 106 and 107. The control apparatus of a base station can be interconnected with other control entities. The control apparatus is typically provided with memory capacity and at least one data processor. The control apparatus and functions may be distributed between a plurality of control units.

In Figure 1 stations 106 and 107 are shown as connected to a wider communications network 113 via gateway 112. A further gateway function may be provided to connect to another network. The smaller stations 116, 118 and 120 can also be connected to the network 113, for example by a separate gateway function and/or via the controllers of the macro level stations. In the example, stations 116 and 118 are connected via a gateway 111 whilst station 120 connects via the controller apparatus 108.

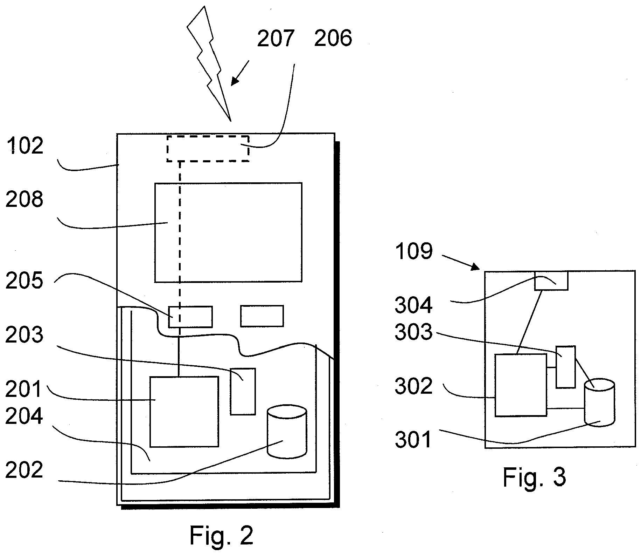

A possible mobile communication device for transmitting and retransmitting information blocks towards the stations of the system will now be described in more detail in reference to Figure 2 showing a schematic, partially sectioned view of a communication device 102. Such a communication device is often referred to as user equipment (UE) or terminal. An appropriate mobile communication device may be provided by any device capable of sending and receiving radio signals. Non-limiting examples include a mobile station (MS) such as a mobile phone or what is known as a 'smart phone', a computer provided with a wireless interface card or other wireless interface facility, personal data assistant (PDA) provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services include two-way or multi-way calls, data communication or multimedia services or simply an access to a data communications network system, such as the Internet. User may also be provided broadcast or multicast data. Non-limiting examples of the content include downloads, television and radio programs, videos, advertisements, various alerts and other information. The mobile device 102 may receive signals over an air interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

A wireless communication device can be provided with a Multiple Input / Multiple Output (MIMO) antenna system. MIMO arrangements as such are known. MIMO systems use multiple antennas at the transmitter and receiver along with advanced digital signal processing to improve link quality and capacity. Although not shown in Figures 1 and 2, multiple antennas can be provided, for example at base stations and mobile stations, and the transceiver apparatus 206 of Figure 2 can provide a plurality of antenna ports. More data can be received and/or sent where there are more antenna elements. A station may comprise an array of multiple antennas. Signalling and muting patterns can be associated with Tx antenna numbers or port numbers of MIMO arrangements.

A mobile device is also typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

Figure 3 shows an example of a control apparatus for a communication system, for example to be coupled to and/or for controlling a station of an access system, such as a base station. In some embodiments base stations comprise a separate control apparatus. In other embodiments the control apparatus can be another network element. The control apparatus 108 can be arranged to provide control on communications in the service area of the system. The control apparatus 108 can be configured to provide control functions in association with generation and communication of request and instructions in view of reception of information blocks, retransmissions and other related information by means of the data processing facility in accordance with certain embodiments described below. For this purpose the control apparatus 109 comprises at least one memory 301, at least one data processing unit 302, 303 and an input/output interface 304. Via the interface the control apparatus can be coupled to a receiver and a transmitter of the base station. The control apparatus 109 can be configured to execute an appropriate software code to provide the control functions. It shall be appreciated that similar component can be provided in a control apparatus provided elsewhere in the system for controlling reception of sufficient information for decoding of received information blocks.

The communication devices 102, 103, 105 can access the communication system based on various access techniques, such as code division multiple access (CDMA), or wideband CDMA (WCDMA). Other examples include time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on.

A non-limiting example of the recent developments in communication system architectures is the long-term evolution (LTE) of the Universal Mobile Telecommunications System (UMTS) that is being standardized by the 3rd Generation Partnership Project (3GPP). As explained above, further development of the LTE is referred to as LTE-Advanced. Non-limiting examples of appropriate LTE access nodes are a base station of a cellular system, for example what is known as NodeB (NB) in the vocabulary of the 3GPP specifications. The LTE employs a mobile architecture known as the Evolved Universal Terrestrial Radio Access Network (E-UTRAN). Base stations of such systems are known as evolved or enhanced Node Bs (eNBs) and may provide E-UTRAN features such as user plane Radio Link ControllMedium Access Control/Physical layer protocol (RLC/MAC/PHY) and control plane Radio Resource Control (RRC) protocol terminations towards the user devices. Other examples of radio access system include those provided by base stations of systems that are based on technologies such as wireless local area network (WLAN) and/or WiMax (Worldwide Interoperability for Microwave Access).

Examples for LTE multipoint reception are described below with reference to stations 106, 107, 118 and 120 and mobile communication device 103 of Figure 1. More particularly, the following certain examples are given in relation to uplink (UL) receiver operation and HARQ-ACK feedback in the case of CoMP (Coordinated multi-point) reception. CoMP reception is considered for LTE-Advanced as an appropriate tool for improving the coverage of high data rates and to increase system throughput. Uplink CoMP implies reception of the transmitted signal at multiple, geographically separated points.

Downlink (DL) CoMP is also being specified in 3GPP Release 11. One aspect of CoMP being considered is dynamic switching between transmission points (TPs) of the data transmission. When UEs are switched between transmission points it is desirable to synchronise the transmissions between the UE and the transmission points to achieve optimal performance and lowest deployment costs.

When allowing fast switching of a Physical Downlink Shared Channel (PDSCH) between two transmission points one consideration is how the UE will derive its time and frequency reference. One option discussed by 3GPP is for the UE to use a legacy synchronization method towards a single serving cell and for switching among different transmission points to be transparent to the UE. With transparent switching the UE may have no means of detecting a potential change of transmission point. According to this option it may therefore be desirable to ensure that the UE is only switched between fully synchronized transmission points. Due to possible differences in the propagation delay for transmissions from different transmission points the time domain synchronization at the UE may not be optimum, but errors may be controlled assuming the distances between transmissions points is limited. Moreover limited errors in timing reference can be recovered via channel estimation as the main impact is increased frequency selectivity.

If transmission points are not perfectly frequency synchronized and the UE uses different transmission points for time reference and data transmission channel estimation then there may be a performance impact. The presence of a frequency error may decorrelate the channel in the time domain similar to Doppler shift appearing when the UE is moving.

Non-synchronised transmission points can cause a performance impact, and may reduce throughput by 10 to 20%. This may also lead to a requirement for higher retransmissions.

Another option for operating dynamic transmission point switching may be to use multi-cell synchronization, such as that used in carrier aggregation. In carrier aggregation a plurality of carriers are aggregated to increase bandwidth. Carrier aggregation comprises aggregating a plurality of component carriers into a carrier that is referred to as an aggregated carrier. When using multi-cell synchronization in carrier aggregation the UE may synchronize independently to different cells transmitted on different frequencies. In this case semi-static signaling may be used to configure different cells.

For dynamic transmission point switching this approach may provide one feasible solution to allow relaxing of synchronization requirements among transmission points. One potential drawback may be that only dynamic switching among cells may be supported, with no support for dynamic switching among transmission points under the same cell.

In one embodiment it is proposed to allow the UE to use a UE specific demodulation reference signal (DM RS) as frequency (or frequency and time) reference instead of always using the reference from the serving cell based on Primary Synchronization Signal / Secondary Synchronization Signal / Common Reference Symbols (PSS/SSS/CRS). In an embodiment signaling may also be introduced to inform the UE when PDSCH and serving cell based frequency reference are different.

During dynamic transmission point selection the point transmitting the PDSCH may change meaning that the frequency reference may also change from TTI to TTI (Transmission Time Interval). If the transmission points are not perfectly frequency synchronized then using a UE specific reference signal for frequency reference, as per some embodiments, may be beneficial.

In some embodiments the UE is informed that the frequency reference may be changing from TTI to TTI, and the UE can then decide whether to complement the PSS/SSS/CRS based synchronization with synchronization using DMRS as a reference signal.

In one embodiment the signaling is implicit from the selection of transmission mode.

In another embodiment the signaling may be explicit. For example the signaling may be included in the RRC signaling which selects the transmission mode. In another example the signaling may be dynamic in the grant notification message (PDCCH frequency reference is still serving cell CRS). The grant notification message indicates when data transmission occurs. The signaling may also indicate via which transmission point the data is going to be transmitted. Indicating the transmission point together with the grant/reception of the data signals allows the UE to determine when it should expect abrupt changes in the frequency and time reference and apply the reference shift during demodulation to improve the reception probability/quality. This may reduce retransmissions and increase user data throughput.

In a further embodiment a combination of dynamic and static signaling may be used. In such an embodiment two or more cells/points may be configured in the UE and indicate with corresponding states in the PDCCH allocation message which transmission point is transmitting the PDSCH. From this information the UE may detect when switching between points is happening and potentially apply cross-subframe averaging of the measurements used to derive synchronization corrections.

The embodiments are not limited to indicating the state in the PDCCH. This principle may be applied alternatively or additionally to any channel using a UE specific reference signal such as enhanced PDCCH (ePDCCH).

In some embodiments, this may be used when carrying out channel station information (CSI) measurements using the Channel State Information Reference Symbols (CSI-RS). In this embodiment some information may be included in the measurement allocation that all allocated CSI-RS ports are synchronized and could potentially have some difference with CRS based reference from serving cell. This could be a specific requirement in the specification or could be part of the RRC signaling allocating CSI-RS measurements. As an example such signaling could have 2 states
- 0: Same reference as your current serving cell (on same frequency),
- 1: Different reference as your current serving cell

Frequency and time tracking may be considered as a natural extension of the channel estimation procedure, and compared to channel estimation the complexity of this procedure is reduced therefore it may be feasible for it to be implemented in UEs,

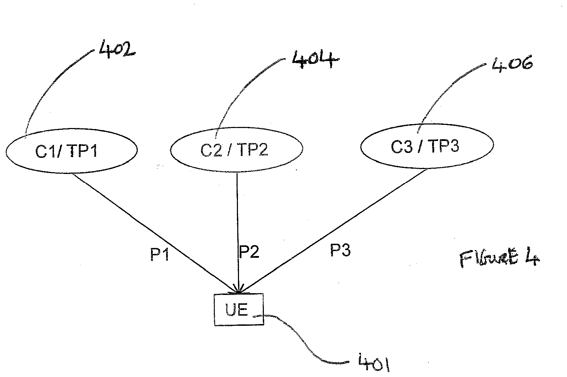

Referring now to Figure 4, there is shown the situation in which a UE 401 is connected to three cells or transmission points 402, 404 and 406. It should be appreciated that the UE 401 could be connected to any number of cells or transmission points and that three are shown in this Figure by way of example only.

UE 401 is connected to transmission point 402 along path P1, to transmission point 404 along path P2 and to transmission point 406 along path P3. Data transmission can take place along any of paths P1, P2 and P3 between the UE 401 and each of the transmission points 402, 404 and 406. In one embodiment the UE 401 may transmit and receive information to and from one of the transmission points 402, 404, 406 only, dependent on which path has the best radio condition. The UE may change the transmission point 402, 404, 406 it is communicating with quickly. In one embodiment the time transmission interval (TTI) is 1ms. In another embodiment the UE 401 may transmit and receive data simultaneously along any number of the paths.

In one implementation the same reference signal may be used for all transmission points/cells. The reference signal may be a demodulation reference signal (DM RS).

In one embodiment, a UE specific reference signal may be used instead of a common reference symbol (CRS). The reference signal may again be a DM RS. This DM RS may contain channel synchronization information. In some embodiments the UE may not know from which transmission point or cell the DM RS signal has been received. The DMRS may be a signal that is known to the user equipment, and which can be used to eliminate uncertainties in the timing and frequency information at the user equipment.

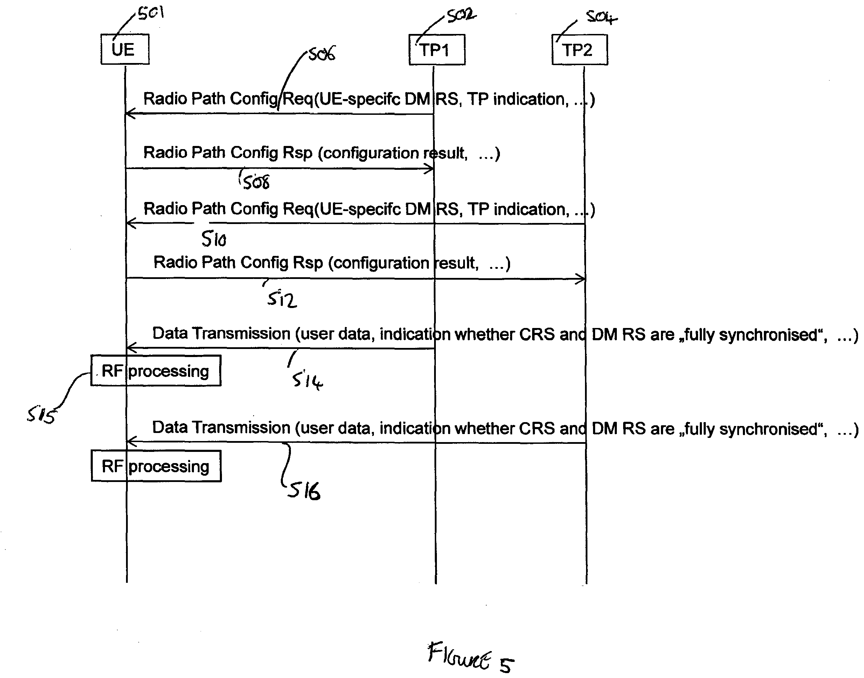

Figure 5 shows an exemplary signaling flow between a UE 501 and first and second transmission points 502 and 504. It should be appreciated that two transmission points have been shown by way of example only. In other embodiments more transmission points and / or UEs may be present.

At step 506 a radio path configure request is sent from the first transmission point 502 to the UE 501. This request may comprise an indication of the identity of the transmission point sending the request, and it may also include a UE specific DM RS. This request is received at a receiver of UE 501. After processing this request, at step 508 the UE 501 sends a radio path configuration result message to the transmission point 502. This message may provide the transmission point 502 with details of the configuration result i.e. details of the radio path which is to be used for communications between the transmission point 602 and the UE 501.

At step 510 a radio path configuration request is sent, this time from the transmission point 504 to the UE 501. Again this request may be received at a receiver of the UE 501. After processing this message a radio path reconfiguration response is sent from the UE 501 to the transmission point 504. This message may provide the transmission point 504 with details of the configuration result i.e. details of the radio path which is to be used for communications between the transmission point 504 and the UE 501.

In some embodiments, at step 506 the UE is informed that the experienced synchronization among CRS and DM RS may be worse than for ordinary operation mode. The UE may then enable DM RS based fine synchronization and uses the DM RS to fine tune the synchronization achieved from CRS.

At step 514 data transmission begins between the transmission point 502 and the UE 501. In some embodiments the information may contain an indication of whether the CRS and DM RS transmission points 502 and 504 are fully synchronized.

The UE may then begin processing this RF data, as shown at step 515.

At step 516 the second transmission point 504 begins transmitting data to the UE 501. Again, in some embodiments the information may contain an indication of whether the CRS and DM RS are fully synchronized.

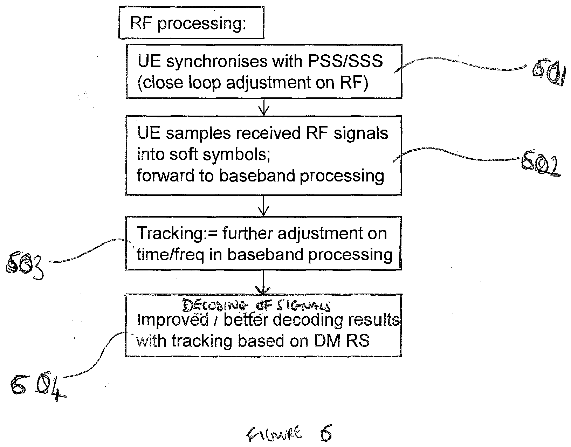

Figure 6 is a flow chart of the radio frequency (RF) processing in the UE 501. As shown at step 601 the UE synchronises with the Primary Synchronization signal (PSS) and/or the Secondary Synchronization signal (SSS). In some embodiments this may comprise closed loop adjustment on the RF. At step 602 the UE samples the received RF signals. In some embodiments this may comprise sampling the received RF signals, and converting the signals in to soft symbols. A soft symbol may be an initial determination of a symbol which has been transmitted. Following this the soft symbols may bo forwarded to the UEs baseband for processing.

The next step 603 involves tracking of the signals. This may be based upon an estimation result from the CRS. Alternatively, as per some embodiments, one or more of the transmission points may indicate whether the received signals are synchronized. In such embodiments, if one or more of the transmission points sends a "non-fully synchronized" indication to the UE, then the UE may additionally use an estimation result from the DM RS as part of the tracking procedure. As a result of this tracking there may be further adjustment of the time and/or frequency of the signals in the baseband processing.

At step 604 the received signals are decoded. The decoding of the received signals may be improved as a result of basing the tracking at least partially upon the DM RS. For example the speed of decoding the signals may be increased, as may the accuracy of the decoding.

Therefore in embodiments the time and frequency synchronization can be achieved with the PSS/SSS/CRS. In some embodiments any small errors in synchronization can be corrected with a UE specific reference signal.

Embodiments may enable the UE to use a UE specific demodulation reference signal (DMRS) as a frequency and time reference. This may be achieved using the configuration messaging between the UE and the transmission points and indicating to the user equipment when the frequency reference of the serving cell and the Physical Downlink Shared Channel (PDSCH) differ. In other words embodiments may provide an indication of when there is a difference between the frequency reference of the serving cell and the current transmission path. Embodiments may therefore facilitate dynamic switching of the transmission points and fast adaptations of the transmission paths in order to keep the throughput high.

Thus some embodiments may allow a UE to differentiate between the following two cases:
(a) Where the DM RS and CRS are fully synchronous
(b) Where the DM RS and CRS are not fully synchronous.

Accordingly in embodiments the UE may be informed whether case (a) or case (b) applies.

Such a UE-specific demodulation reference signal (DM RS) may provide a more accurate frequency reference to the UE which may improve performance. For example it may allow for higher user throughput, fewer retransmissions, and higher data throughput in the cell.

Additionally, some embodiments may provide advantages to fast moving UEs, since the impact of the Doppler effect on demodulation signals increases with the speed of the UE.

An appropriately adapted computer program code product or products may be used for implementing the embodiments, when loaded on an appropriate data processing apparatus, for example for determining geographical boundary based operations and/or other control operations. The program code product for providing the operation may be stored on, provided and embodied by means of an appropriate carrier medium. An appropriate computer program can be embodied on a computer readable record medium. A possibility is to download the program code product via a data network. In general, the various embodiments may be implemented in hardware or special purpose circuits, software, logic or any combination thereof. Embodiments of the inventions may thus be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

It is also noted herein that while the above describes exemplifying embodiments of the invention, there are several variations and modifications which may be made to the disclosed solution without departing from the scope of the present invention.

## Claims

1. A method comprising:
receiving at a user equipment (102; 103; 105) a plurality of broadcast signals, wherein said plurality of signals comprise at least one of a primary synchronization signal (PSS); a secondary synchronization signal (SSS); and a common reference symbol (CRS);
receiving control information, said control information defining which of a plurality of signals said user equipment (102; 103; 105) uses for synchronization, wherein said control information indicates that said user equipment (102;103;105) is to use a user equipment specific signal for synchronization to obtain synchronization information with respect to a transmission point (106;107;118;120);
receiving at said user equipment (102;103;105) said user equipment specific signal, wherein said user equipment specific signal comprises a demodulation reference signal (DMRS); and
using said user equipment specific signal to obtain said synchronization information with respect to said transmission point (106;107;118;120), wherein said transmission point (106;107;118;120) is one transmission point of a plurality of transmission points (106;107;118;120), wherein said synchronization information comprises frequency information and timing information, and wherein said user equipment (102;103;105) is in communication with the plurality of transmission points (106; 107; 118; 120), said transmission point (106;107;118;120) being a serving transmission point, said control information indicating if said user equipment (102;103;105) is to use a same or different reference to that of the serving transmission point for at least one other of said transmission points (106;107;118;120).

2. A method comprising
transmitting to a user equipment (102;103;105) a plurality of broadcast signals, wherein said plurality of signals comprise at least one of a primary synchronization signal (PSS); a secondary synchronization signal (SSS); and a common reference symbol (CRS);
transmitting to said user equipment (102; 103; 105) information, said information being usable by the user equipment (102; 103; 105) to determine which of a plurality of signals to use for synchronization, wherein said information indicates that the user equipment (102; 103; 105) is to use a user equipment specific signal for synchronization to obtain synchronization information with respect to a transmission point (106;107;118;120), wherein said synchronization information comprises frequency information and timing information, wherein said user equipment specific signal comprises a demodulation reference signal (DMRS), and wherein said user equipment (102;103;105) is in communication with a plurality of transmission points (106;107;118;120), one of said transmission points (106;107;118;120) being a serving transmission point, said information indicating if said user equipment (102;103;105) is to use a same or different reference to that of the serving transmission point for at least one other of said transmission points (106;107;118;120).

3. A method as set forth in claim 2, wherein said information comprises synchronization accuracy information.

4. An apparatus (102) comprising:
at least one processor (201);
and at least one memory (202) including computer program code;
the at least one memory (202) and the computer program code configured to, with the at least one processor (201) cause the apparatus (102) at least to receive a plurality of broadcast signals, wherein said plurality of signals comprise at least one of a primary synchronization signal (PSS); a secondary synchronization signal (SSS); and a common reference symbol (CRS);
receive control information, said control information defining which of a plurality of signals a user equipment (102;103;105) uses for synchronization, wherein said control information indicates that said user equipment (102;103;105) is to use a user equipment specific signal for synchronization to obtain synchronization information with respect to a transmission point (106;107;118;120);
receive said user equipment specific signal, wherein said user equipment specific signal comprises a demodulation reference signal (DMRS); and
use said user equipment specific signal to obtain said synchronization information with respect to said transmission point (106;107;118;120), wherein said transmission point (106;107;118;120) is one transmission point of a plurality of transmission points (106;107;118;120), wherein said synchronization information comprises frequency information and timing information, and wherein said user equipment (102;103;105) is in communication with the plurality of transmission points (106;107;118;120), said transmission point (106;107;118;120) being a serving transmission point, said control information indicating if said user equipment (102;103;105) is to use a same or different reference to that of the serving transmission point for at least one other of said transmission points (106;107;118;120).

5. An apparatus (109) comprising:
at least one processor (302);
and at least one memory (301) including computer program code;
the at least one memory (301) and the computer program code configured to, with the at least one processor (302) cause the apparatus (109) at least to transmit to a user equipment (102;103;105) a plurality of broadcast signals, wherein said plurality of signals comprise at least one of a primary synchronization signal (PSS); a secondary synchronization signal (SSS); and a common reference symbol (CRS);
transmit to said user equipment (102;103;105) information, said information being usable by the user equipment (102;103;105) to determine which of a plurality of signals to use for synchronization, wherein said information indicates that the user equipment (102;103;105) is to use a user equipment specific signal for synchronization to obtain synchronization information with respect to a transmission point (106;107;118;120), wherein said synchronization information comprises frequency information and timing information, wherein said user equipment specific signal comprises a demodulation reference signal (DMRS), and wherein said user equipment (102;103;105) is in communication with a plurality of transmission points (106;107;118;120), one of said transmission points (106;107;118;120) being a serving transmission point, said information indicating if said user equipment (102; 103; 105) is to use a same or different reference to that of the serving transmission point for at least one other of said transmission points (106;107;118;120).

6. A computer program comprising computer executable instructions which when run on one or more processors perform the method of any of claims 1 to 3.

## Patentansprüche

1. Verfahren, das Folgendes umfasst:
Empfangen einer Vielzahl von Broadcastsignalen an einer Teilnehmereinrichtung (102; 103; 105), wobei die Vielzahl von Signalen mindestens eines von einem primären Synchronisationssignal (PSS); einem sekundären Synchronisationssignal (SSS); und einem gemeinsamen Referenzsymbol (CRS) umfassen;
Empfangen von Steuerinformationen, wobei die Steuerinformationen definieren, welches von einer Vielzahl von Signalen die Teilnehmereinrichtung (102; 103; 105) für eine Synchronisation verwendet, wobei die Steuerinformationen anzeigen, dass die Teilnehmereinrichtung (102; 103; 105) ein teilnehmereinrichtungsspezifisches Signal für eine Synchronisation verwenden soll, um Synchronisationsinformationen mit Bezug auf einen Übertragungspunkt (106; 107; 118; 120) zu erhalten;
Empfangen des teilnehmereinrichtungsspezifischen Signals an der Teilnehmereinrichtung (102; 103; 105), wobei das teilnehmereinrichtungsspezifische Signal ein Demodulationsreferenzsignal (DMRS) umfasst; und
Verwenden des teilnehmereinrichtungsspezifischen Signals, um die Synchronisationsinformationen mit Bezug auf den Übertragungspunkt (106; 107; 118; 120) zu erhalten, wobei der Übertragungspunkt (106; 107; 118; 120) ein Übertragungspunkt von einer Vielzahl von Übertragungspunkten (106; 107; 118; 120) ist, wobei die Synchronisationsinformationen Frequenzinformationen und Timinginformationen umfassen, und wobei die Teilnehmereinrichtung (102; 103; 105) mit der Vielzahl von Übertragungspunkten (106; 107; 118; 120) in Kommunikation steht, wobei der Übertragungspunkt (106; 107; 118; 120) ein bedienender Übertragungspunkt ist, wobei die Steuerinformationen anzeigen, ob die Teilnehmereinrichtung (102; 103; 105) für mindestens einen anderen der Übertragungspunkte (106; 107; 118; 120) eine selbe oder eine andere Referenz zu der des bedienenden Übertragungspunkts verwenden soll.

2. Verfahren, das Folgendes umfasst
Übertragen einer Vielzahl von Broadcastsignalen zu einer Teilnehmereinrichtung (102; 103; 105), wobei die Vielzahl von Signalen mindestens eines von einem primären Synchronisationssignal (PSS); einem sekundären Synchronisationssignal (SSS) und einem gemeinsamen Referenzsymbol (CRS) umfassen;
Übertragen von Informationen zur Teilnehmereinrichtung (102; 103; 105), wobei die Informationen von der Teilnehmereinrichtung (102; 103; 105) verwendbar sind, um zu bestimmen, welches einer Vielzahl von Signalen für eine Synchronisation zu verwenden ist, wobei die Informationen anzeigen, dass die Teilnehmereinrichtung (102; 103; 105) ein teilnehmereinrichtungsspezifisches Signal für eine Synchronisation verwenden soll, um Synchronisationsinformationen mit Bezug auf einen Übertragungspunkt (106; 107; 118; 120) zu erhalten, wobei die Synchronisationsinformationen Frequenzinformationen und Timinginformationen umfassen, wobei das teilnehmereinrichtungsspezifische Signal ein Demodulationsreferenzsignal (DMRS) umfasst, und wobei die Teilnehmereinrichtung (102; 103; 105) mit einer Vielzahl von Übertragungspunkten (106; 107; 118; 120) in Kommunikation steht, wobei einer der Übertragungspunkte (106; 107; 118; 120) ein bedienender Übertragungspunkt ist, wobei die Informationen anzeigen, ob die Teilnehmereinrichtung (102; 103; 105) für mindestens einen anderen der Übertragungspunkte (106; 107; 118; 120) eine selbe oder eine andere Referenz zum bedienenden Übertragungspunkt verwenden soll.

3. Verfahren nach Anspruch 2, wobei die Informationen Synchronisationsgenauigkeitsinformationen umfassen.

4. Vorrichtung (102), die Folgendes umfasst:
mindestens einen Prozessor (201);
und mindestens einen Speicher (202), der einen Computerprogrammcode beinhaltet;
wobei der mindestens eine Speicher (202) und der Computerprogrammcode dazu ausgelegt sind, die Vorrichtung (102) mit dem mindestens einen Prozessor (201) mindestens zu Folgendem zu veranlassen
Empfangen einer Vielzahl von Broadcastsignalen, wobei die Vielzahl von Signalen mindestens eines von einem primären Synchronisationssignal (PSS); einem sekundären Synchronisationssignal (SSS) und einem gemeinsamen Referenzsymbol (CRS) umfassen;
Empfangen von Steuerinformationen, wobei die Steuerinformationen definieren, welches von einer Vielzahl von Signalen eine Teilnehmereinrichtung (102; 103; 105) für eine Synchronisation verwendet, wobei die Steuerinformationen anzeigen, dass die Teilnehmereinrichtung (102; 103; 105) ein teilnehmereinrichtungsspezifisches Signal für eine Synchronisation verwenden soll, um Synchronisationsinformationen mit Bezug auf einen Übertragungspunkt (106; 107; 118; 120) zu erhalten;
Empfangen des teilnehmereinrichtungsspezifischen Signals, wobei das teilnehmereinrichtungsspezifische Signal ein Demodulationsreferenzsignal (DMRS) umfasst; und
Verwenden des teilnehmereinrichtungsspezifischen Signals, um die Synchronisationsinformationen mit Bezug auf den Übertragungspunkt (106; 107; 118; 120) zu erhalten, wobei der Übertragungspunkt (106; 107; 118; 120) ein Übertragungspunkt von einer Vielzahl von Übertragungspunkten (106; 107; 118; 120) ist, wobei die Synchronisationsinformationen Frequenzinformationen und Timinginformationen umfassen, und wobei die Teilnehmereinrichtung (102; 103; 105) mit der Vielzahl von Übertragungspunkten (106; 107; 118; 120) in Kommunikation steht, wobei der Übertragungspunkt (106; 107; 118; 120) ein bedienender Übertragungspunkt ist, wobei die Steuerinformationen anzeigen, ob die Teilnehmereinrichtung (102; 103; 105) für mindestens einen anderen der Übertragungspunkte (106; 107; 118; 120) eine selbe oder eine andere Referenz zu der des bedienenden Übertragungspunkts verwenden soll.

5. Vorrichtung (109), die Folgendes umfasst:
mindestens einen Prozessor (302);
und mindestens einen Speicher (301), der einen Computerprogrammcode beinhaltet;
wobei der mindestens eine Speicher (301) und der Computerprogrammcode dazu ausgelegt sind, die Vorrichtung (109) mit dem mindestens einen Prozessor (302) mindestens zu Folgendem zu veranlassen
Übertragen einer Vielzahl von Broadcastsignalen zu einer Teilnehmereinrichtung (102; 103; 105), wobei die Vielzahl von Signalen mindestens eines von einem primären Synchronisationssignal (PSS); einem sekundären Synchronisationssignal (SSS) und einem gemeinsamen Referenzsymbol (CRS) umfassen;
Übertragen von Informationen zur Teilnehmereinrichtung (102; 103; 105), wobei die Informationen von der Teilnehmereinrichtung (102; 103; 105) verwendbar sind, um zu bestimmen, welches einer Vielzahl von Signalen für eine Synchronisation zu verwenden ist, wobei die Informationen anzeigen, dass die Teilnehmereinrichtung (102; 103; 105) ein teilnehmereinrichtungsspezifisches Signal für eine Synchronisation verwenden soll, um Synchronisationsinformationen mit Bezug auf einen Übertragungspunkt (106; 107; 118; 120) zu erhalten, wobei die Synchronisationsinformationen Frequenzinformationen und Timinginformationen umfassen, wobei das teilnehmereinrichtungsspezifische Signal ein Demodulationsreferenzsignal (DMRS) umfasst, und wobei die Teilnehmereinrichtung (102; 103; 105) mit einer Vielzahl von Übertragungspunkten (106; 107; 118; 120) in Kommunikation steht, wobei einer der Übertragungspunkte (106; 107; 118; 120) ein bedienender Übertragungspunkt ist, wobei die Informationen anzeigen, ob die Teilnehmereinrichtung (102; 103; 105) für mindestens einen anderen der Übertragungspunkte (106; 107; 118; 120) eine selbe oder eine andere Referenz zum bedienenden Übertragungspunkt verwenden soll.

6. Computerprogramm, das computerausführbare Anweisungen umfasst, die, wenn sie auf einem oder mehreren Prozessoren ausgeführt werden, das Verfahren von einem der Ansprüche 1 bis 3 durchführen.

## Revendications

1. Procédé comprenant :
la réception, au niveau d'un équipement utilisateur (102 ; 103 ; 105), d'une pluralité de signaux de diffusion, dans lequel ladite pluralité de signaux comprend au moins un parmi un signal de synchronisation primaire (PSS) ; un signal de synchronisation secondaire (SSS) ; et un symbole de référence commun (CRS) ;
la réception d'informations de commande, lesdites informations de commande définissant, parmi une pluralité de signaux, celui que ledit équipement utilisateur (102 ; 103 ; 105) utilise pour la synchronisation, dans lequel lesdites informations de commande indiquent que ledit équipement utilisateur (102 ; 103 ; 105) doit utiliser un signal de synchronisation spécifique à l'équipement utilisateur pour obtenir des informations de synchronisation par rapport à un point de transmission (106 ; 107 ; 118 ; 120) ;
la réception, au niveau dudit équipement utilisateur (102 ; 103 ; 105), dudit signal spécifique à l'équipement utilisateur, dans lequel ledit signal spécifique à l'équipement utilisateur comprend un signal de référence de démodulation (DMRS) ; et
l'utilisation dudit signal spécifique à l'équipement utilisateur pour obtenir lesdites informations de synchronisation par rapport audit point de transmission (106 ; 107 ; 118 ; 120), dans lequel ledit point de transmission (106 ; 107 ; 118 ; 120) est un point de transmission parmi une pluralité de points de transmission (106 ; 107 ; 118 ; 120), dans lequel lesdites informations de synchronisation comprennent des informations de fréquence et des informations de temporisation, et dans lequel ledit équipement utilisateur (102 ; 103 ; 105) est en communication avec la pluralité de points de transmission (106 ; 107 ; 118 ; 120), ledit point de transmission (106 ; 107 ; 118 ; 120) étant un point de transmission de service, lesdites informations de commande indiquant si ledit équipement utilisateur (102 ; 103 ; 105) doit utiliser une même référence ou une référence différente de celle du point de transmission de service pour au moins un autre desdits points de transmission (106 ; 107 ; 118 ; 120).

2. Procédé comprenant
la transmission d'une pluralité de signaux de diffusion à un équipement utilisateur (102 ; 103 ; 105), dans lequel ladite pluralité de signaux comprend au moins un parmi un signal de synchronisation primaire (PSS) ; un signal de synchronisation secondaire (SSS) ; et un symbole de référence commun (CRS) ;
la transmission d'information audit équipement utilisateur (102 ; 103 ; 105), lesdites informations étant utilisables par l'équipement utilisateur (102 ; 103 ; 105) pour déterminer, parmi une pluralité de signaux, celui à utiliser pour la synchronisation, dans lequel lesdites informations indiquent que l'équipement utilisateur (102 ; 103 ; 105) doit utiliser un signal de synchronisation spécifique à l'équipement utilisateur pour obtenir des informations de synchronisation par rapport à un point de transmission (106 ; 107 ; 118 ; 120), dans lequel lesdites informations de synchronisation comprennent des informations de fréquence et des informations de temporisation, dans lequel ledit signal spécifique à l'équipement utilisateur comprend un signal de référence de démodulation (DMRS), et dans lequel ledit équipement utilisateur (102 ; 103 ; 105) est en communication avec une pluralité de points de transmission (106 ; 107 ; 118 ; 120), un desdits points de transmission (106 ; 107 ; 118 ; 120) étant un point de transmission de service, lesdites informations indiquant si ledit équipement utilisateur (102 ; 103 ; 105) doit utiliser une même référence ou une référence différente de celle du point de transmission de service pour au moins un autre desdits points de transmission (106 ; 107 ; 118 ; 120).

3. Procédé selon la revendication 2, dans lequel lesdites informations comprennent des informations de précision de synchronisation.

4. Appareil (102) comprenant :
au moins un processeur (201) ;
et au moins une mémoire (202) comportant un code de programme informatique ;
l'au moins une mémoire (202) et le code de programme informatique étant configurés pour, avec l'au moins un processeur (201) amener l'appareil (102) à au moins
recevoir une pluralité de signaux de diffusion, dans lequel ladite pluralité de signaux comprend au moins un parmi un signal de synchronisation primaire (PSS) ; un signal de synchronisation secondaire (SSS) ; et un symbole de référence commun (CRS) ;
recevoir des informations de commande, lesdites informations de commande définissant, parmi une pluralité de signaux, celui qu'un équipement utilisateur (102 ; 103 ; 105) utilise pour la synchronisation, dans lequel lesdites informations de commande indiquent que ledit équipement utilisateur (102 ; 103 ; 105) doit utiliser un signal de synchronisation spécifique à l'équipement utilisateur pour obtenir des informations de synchronisation par rapport à un point de transmission (106 ; 107 ; 118 ; 120) ;
recevoir ledit signal spécifique à l'équipement utilisateur, dans lequel ledit signal spécifique à l'équipement utilisateur comprend un signal de référence de démodulation (DMRS) ; et
utiliser ledit signal spécifique à l'équipement utilisateur pour obtenir lesdites informations de synchronisation par rapport audit point de transmission (106 ; 107 ; 118 ; 120), dans lequel ledit point de transmission (106 ; 107 ; 118 ; 120) est un point de transmission parmi une pluralité de points de transmission (106 ; 107 ; 118 ; 120), dans lequel lesdites informations de synchronisation comprennent des informations de fréquence et des informations de temporisation, et dans lequel ledit équipement utilisateur (102 ; 103 ; 105) est en communication avec la pluralité de points de transmission (106 ; 107 ; 118 ; 120), ledit point de transmission (106 ; 107 ; 118 ; 120) étant un point de transmission de service, lesdites informations de commande indiquant si ledit équipement utilisateur (102 ; 103 ; 105) doit utiliser une même référence ou une référence différente de celle du point de transmission de service pour au moins un autre desdits points de transmission (106 ; 107 ; 118 ; 120).

5. Appareil (109) comprenant :
au moins un processeur (302) ;
et au moins une mémoire (301) comportant un code de programme informatique ;
l'au moins une mémoire (301) et le code de programme informatique étant configurés pour, avec l'au moins un processeur (302) amener l'appareil (109) à au moins
transmettre une pluralité de signaux de diffusion à un équipement utilisateur (102 ; 103 ; 105), dans lequel ladite pluralité de signaux comprend au moins un parmi un signal de synchronisation primaire (PSS) ; un signal de synchronisation secondaire (SSS) ; et un symbole de référence commun (CRS) ;
transmettre des information audit équipement utilisateur (102 ; 103 ; 105), lesdites informations étant utilisables par l'équipement utilisateur (102 ; 103 ; 105) pour déterminer, parmi une pluralité de signaux, celui à utiliser pour la synchronisation, dans lequel lesdites informations indiquent que l'équipement utilisateur (102 ; 103 ; 105) doit utiliser un signal de synchronisation spécifique à l'équipement utilisateur pour obtenir des informations de synchronisation par rapport à un point de transmission (106 ; 107 ; 118 ; 120), dans lequel lesdites informations de synchronisation comprennent des informations de fréquence et des informations de temporisation, dans lequel ledit signal spécifique à l'équipement utilisateur comprend un signal de référence de démodulation (DMRS), et dans lequel ledit équipement utilisateur (102 ; 103 ; 105) est en communication avec une pluralité de points de transmission (106 ; 107 ; 118 ; 120), un desdits points de transmission (106 ; 107 ; 118 ; 120) étant un point de transmission de service, lesdites informations indiquant si ledit équipement utilisateur (102 ; 103 ; 105) doit utiliser une même référence ou une référence différente de celle du point de transmission de service pour au moins un autre desdits points de transmission (106 ; 107 ; 118 ; 120).

6. Programme informatique comprenant des instructions exécutables par ordinateur qui, lorsqu'elles sont exécutées sur un ou plusieurs processeurs, permettent de réaliser le procédé de l'une des revendications 1 à 3.
